# EUROPEAN PATENT SPECIFICATION

(11) **EP 1 277 168 B1**
(45) Date of publication and mention of the grant of the patent: **22.09.2004**
(21) Application number: 01932059.7
(22) Date of filing: 24.04.2001
(51) Int. Cl.: G06K 19/06

(54) **MAGNETIC STRIP WITH ADHESIVE LAYER**
MAGNETSTREIFEN MIT EINER KLEBESCHICHT
BANDE MAGNETIQUE A COUCHE ADHESIVE

(30) Priority: 28.04.2000 IT MI000094
(43) Date of publication of application: 22.01.2003
(73) Proprietor: Zanetti, Giancarlo, 20147 Milano (IT)
(72) Inventor: Zanetti, Giancarlo, 20147 Milano (IT)
(74) Representative: Siniscalco, Fabio
(86) International application number: PCT/IT2001/000201
(87) International publication number: WO 2001/084487

(56) References cited:
- DE-A- 2 839 655
- DE-A- 19 722 626
- US-A- 4 884 734
- US-A- 6 053 406
- PATENT ABSTRACTS OF JAPAN vol. 1996, no. 06, 28 June 1996 (1996-06-28) & JP 08 052172 A (KOSHIRO HAGIWARA), 27 February 1996 (1996-02-27)

## Description

The present invention relates to a magnetic strip.

Magnetic strips are commonly used in various applications such as, for example, in credit cards, identity badges, parking tickets, telephone cards, and the like.

Typically, the magnetic strip is incorporated in a card made of plastics material, during its manufacture (for example, for credit cards and identity badges). Alternatively, the magnetic strip is printed on a paper card (for example, for parking tickets and telephone cards).

A disadvantage of the known solutions described above is that the production of the magnetic strip in any case requires a stage of industrial processing of the plastics or paper card. This makes it extremely difficult to use magnetic strips on objects of other types or on already-existing objects such as, for example, a book.

Moreover, the card (plastics or paper) is subject to considerable mechanical and thermal stresses during the production of the magnetic strip. These stresses may damage the card and in any case make it impossible to form a magnetic strip on particularly delicate substrates such as, for example, photographic paper.

A magnetic strip comprising a substrate element having a first principal surface and a second principal surface disposed opposite one another, a layer of magnetic material disposed on the first surface of the substrate element, and a layer of adhesive material disposed on the second surface of the. substrate element is known.

Conventional magnetic strips are known from De-A-2839655, US patent 6053406 and DE-A- 19722626. The invention is defined by the claims.

Further characteristics and the advantages of the magnetic strip will become clear from the following description of a preferred embodiment thereof, given by way of nonlimiting example with reference to the appended drawings, in which:
Figure 1 shows the magnetic strip in section,
Figure 2 is a magnetic device in which the magnetic strip of the present invention can be used,
Figure 3 shows a dispenser for the magnetic strip,
Figure 4 shows a system usable for producing the magnetic strip.

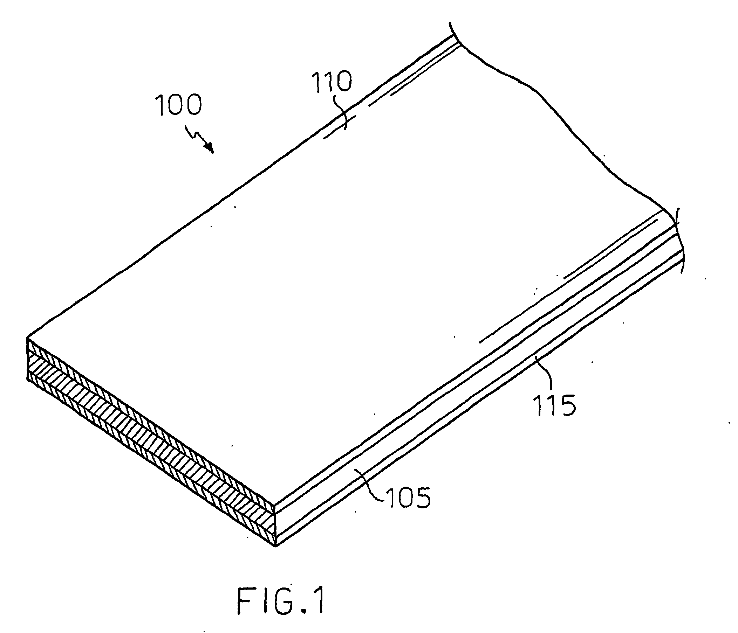

With reference in particular to Figure 1, this shows a magnetic strip 100. The magnetic strip 100 includes a substrate element 105 constituted by a long, straight portion of thin material (for example, with a thickness of 12.5 µm). A layer of ferromagnetic material 110 is arranged on a principal surface of the substrate element 105 (for example, an upper surface); the layer of ferromagnetic material 110 preferably has a thickness of 3.5 µm and a coercivity of 30 kA/m (375 Oe).

The magnetic strip 100 further includes a flexible protective tape 315 disposed on the layer of adhesive material 115 of the magnetic strip '100 for preventing damage of the layer of the magnetic material 110.

Similar considerations apply if the substrate element or the layer of ferromagnetic material have a different thickness or if the layer of ferromagnetic material has different characteristics.

In the magnetic strip 100, a layer of adhesive material 115 is provided on the other principal surface of the substrate element 105 (a lower surface in the embodiment illustrated).

The magnetic strip thus produced can be applied to any object extremely easily. This is achieved without the need for any industrial processing of the object to which the magnetic strip is to be applied; this avoids the subjection of the object to mechanical and thermal stresses typical of such a processing step. The solution of the present invention thus enables the magnetic strip to be applied even to particularly delicate substrates.

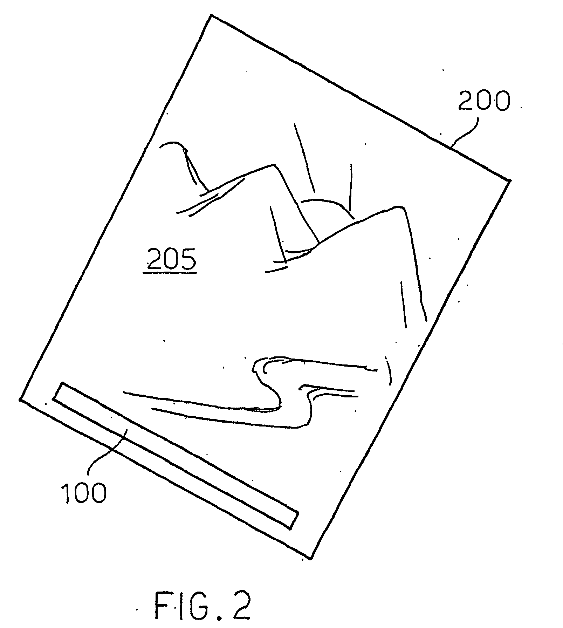

With reference, for example, to Figure 2, this shows a piece of photographic paper 200 on which a photograph 205 is printed. A portion of the magnetic strip 100 is glued (by means of the adhesive layer) to the photographic paper 200, for example, in the vicinity of a lower edge thereof. The magnetic strip 100 is used to record information relating to the photograph 205 (such as the date, subject, etc.). This information is written on the magnetic strip 100 with the use, for example, of a recording/playback pen as described in the document WO-A-97/10590.

Similar considerations apply if the magnetic strip is glued to a page of a book (in order to record the pronunciation of a text in a foreign language), on a board for children (for recording the name of an object depicted), on a package (for recording the contents and other information, such as an expiry date for use by the sightless) or, more generally, on a main body of any magnetic device.

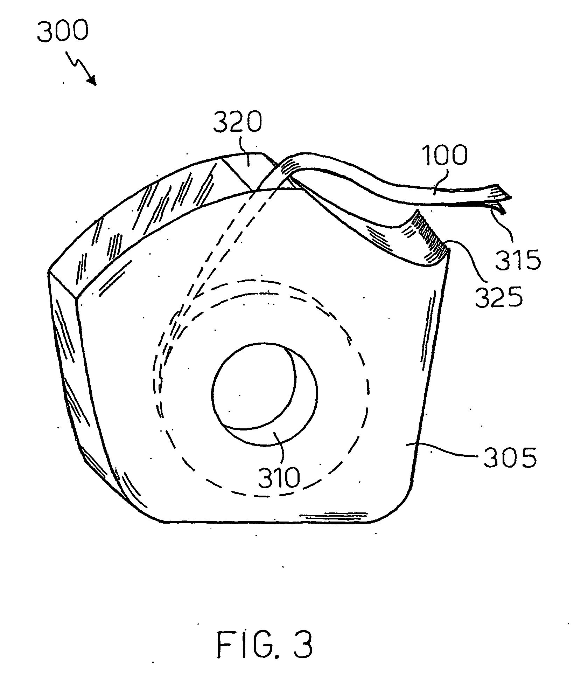

With reference now to Figure 3, the substrate element of the magnetic strip 100 is preferably constituted by a flexible tape. This enables the magnetic strip 100 to be applied to objects of any shape, for example, to curved surfaces.

The magnetic strip 100 is advantageously housed in a dispenser 300. The dispenser 300 is constituted by an enveloping plastics casing 305. Inside the casing 305 there is a cylindrical core 310 around which the magnetic strip 100 is wound. A flexible protective tape (for example, made of 80 g glassine with a thickness of 10-15µm) is disposed on the adhesive layer of the magnetic strip 100 to prevent damage to the magnetic strip. A free end of the magnetic strip 100 emerges from the casing 305 through a slot 320. Externally, the casing 305 has a serrated edge 325 for cutting the magnetic strip 100. This dispenser 300 makes the use of the magnetic strip 100 extremely practical.

Similar considerations apply if the dispenser has a different structure, for example, if the serrated edge is replaced by other equivalent means for manual cutting of the magnetic strip, if the protective tape is made of a different material and with a different thickness, if there is no casing or no serrated edge, or if the magnetic strip is wound around the core without the protective tape (with the use, for example, of an adhesive layer with low adhesive strength). The magnetic tape without a protective tape does not fall under the invention. Alternatively, the magnetic strip is pre-cut into adhesive labels, the substrate element is stiff, etc.

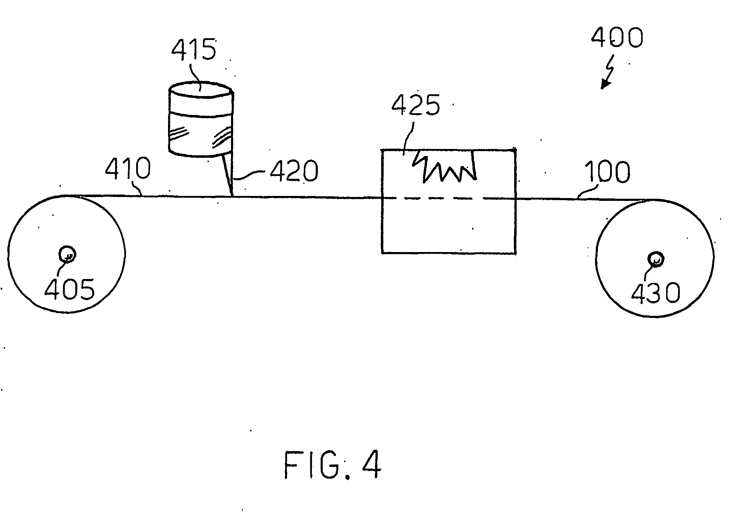

An example of a system usable for the production of the above-described magnetic strip is shown in Figure 4. This system, indicated 400 in the drawing, includes a supply roller 405 around which a roll of adhesive tape 410 is wound. The adhesive tape 410 is unwound from the supply roller 405 and is made to pass in the vicinity of a reservoir 415; a magnetic paste constituted by a mixture of ferromagnetic oxide, vitreous substrate material, and organic binding material (solvents and binders) is loaded into the reservoir 415. The reservoir 415 has a nozzle 420 which is used to spread the magnetic paste on an upper (non-adhesive) surface of the tape 410. The adhesive tape 410 (covered with the magnetic paste) is transferred to a drying oven 425 so as to evaporate the solvent and to cause the magnetic paste to adhere to the adhesive tape. The magnetic strip 100 thus produced is collected by a winding roll 430.

Preferably, the substrate element of the magnetic strip 100 is made of polyester and the adhesive layer is made of acrylic material in aqueous emulsion (with a density of 20g/m³). These materials allow the adhesive tape 410 to be subjected to the drying step in the oven 425 without undergoing any damage.

The above-described method for the production of the magnetic strip is extremely quick and economical. Moreover, the fact that the adhesive layer is spread on the substrate element before the magnetic layer prevents the magnetic layer from being spoilt by the adhesive material.

Similar considerations apply if the magnetic paste has a different composition, if a different system is used for supplying the adhesive tape, etc. Alternatively, the substrate element is made of another material (for example, a paper material), if a different adhesive material is used, if the magnetic layer is spread on the substrate element before the adhesive layer, if the magnetic strip is produced by a spraying process, a rotogravure process, by electrostatic systems, etc.

Naturally, in order to satisfy contingent and specific requirements, a person skilled in the art may apply to the above-described magnetic strip many modifications and variations all of which, however, are included within the scope of protection of the invention as defined by the appended claims.

## Claims

1. A magnetic strip (100) comprising a substrate element (105) having a first principal surface and a second principal surface disposed opposite one another, a layer of magnetic material (110) disposed on the first surface of the substrate element (105) and a layer of adhesive material (115) disposed on the second surface of the substrate element (105),
**characterized in that** it further includes a flexible protective tape (315) disposed on the layer of adhesive material (115) of the magnetic strip (100) for preventing damage of the layer of the magnetic material (110).

2. A magnetic strip (100) according to Claim 1 in which the substrate element (105) is constituted by a flexible tape.

3. A magnetic strip (100) according to Claim 2, in which the substrate element is made of polyester.

4. A magnetic strip (100) according to any one of Claims 1 to 3 in which the layer of adhesive material is made of acrylic material in aqueous emulsion.

5. A magnetic strip (100) according to any one of Claims 1 to 4, in which the layer of magnetic material includes a magnetic oxide paste.

6. A dispenser (300) comprising a core (310) and the magnetic strip (100) according to any one of Claims 1 to 5, the magnetic strip (100) being wound around the core (310).

7. A dispenser (300) according to Claim 6, further comprising a casing (305) enveloping the magnetic strip (100), the casing (305) having a slot (320) through which the magnetic strip (100) can emerge.

8. A dispenser (300) according to any one of Claims 6 to 7, further comprising means (325) for manual cutting of the magnetic strip (100).

9. A dispenser (300) according to Claim 8 in which the means (325) for manual cutting of the magnetic strip (100) comprise a serrated edge (325) of the casing (305).

## Patentansprüche

1. Ein Magnetstreifen (100), der ein Substratelement (105), das eine erste Hauptoberfläche und eine zweite Hauptoberfläche aufweist, die gegenüber voneinander angeordnet sind, eine Schicht aus einem magnetischen Material (110), die auf der ersten Oberfläche des Substratelements (105) angeordnet ist, und eine Schicht aus einem haftenden Material (115) aufweist, die auf der zweiten Oberfläche des Substratelements (105) angeordnet ist,
**dadurch gekennzeichnet, dass** derselbe ferner ein flexibles Schutzband (315) umfasst, das auf der Schicht des haftenden Materials (115) des Magnetstreifens (100) angeordnet ist, zum Verhindern einer Beschädigung der Schicht des magnetischen Materials (110).

2. Ein Magnetstreifen (100) gemäß Anspruch 1, bei dem das Substratelement (105) durch ein flexibles Band gebildet ist.

3. Ein Magnetstreifen (100) gemäß Anspruch 2, bei dem das Substratelement aus Polyester hergestellt ist.

4. Ein Magnetstreifen (100) gemäß einem der Ansprüche 1 bis 3, bei dem die Schicht des haftenden Materials aus einem Acrylmaterial in einer wässrigen Emulsion hergestellt ist.

5. Ein Magnetstreifen (100) gemäß einem der Ansprüche 1 bis 4, bei dem die Schicht des magnetischen Materials eine magnetische Oxidpaste umfasst.

6. Ein Spender (300), der einen Kern (310) und den Magnetstreifen (100) gemäß einem der Ansprüche 1 bis 5 aufweist, wobei der Magnetstreifen (100) um den Kern (310) gewickelt ist.

7. Ein Spender (300) gemäß Anspruch 6, der ferner ein Gehäuse (305) aufweist, das den Magnetstreifen (100) umgibt, wobei das Gehäuse (305) einen Schlitz (320) aufweist, durch den der Magnetstreifen (100) austreten kann.

8. Ein Spender (300) gemäß Anspruch 6 oder 7, der ferner eine Einrichtung (325) zum manuellen Schneiden des Magnetstreifens (100) aufweist.

9. Ein Spender (300) gemäß Anspruch 8, bei dem die Einrichtung (325) zum manuellen Schneiden des Magnetstreifens (100) eine gezackte Kante (325) des Gehäuses (305) aufweist.

## Revendications

1. Bande magnétique (100) comportant un élément (105) de substrat ayant une première surface principale et une seconde surface principale disposées de façon à être opposées l'une à l'autre, une couche de matière magnétique (110) disposée sur la première surface de l'élément de substrat (105) et une couche de matière adhésive (115) disposée sur la seconde surface de l'élément de substrat (105),
**caractérisée en ce qu'**elle comprend en outre un ruban protecteur souple (315) disposé sur la couche de matière adhésive (115) de la bande magnétique (100) pour empêcher une détérioration de la couche de la matière magnétique (110).

2. Bande magnétique (100) selon la revendication 1, dans laquelle l'élément de substrat (105) est constitué par un ruban souple.

3. Bande magnétique (100) selon la revendication 2, dans laquelle l'élément de substrat est réalisé en polyester.

4. Bande magnétique (100) selon l'une quelconque des revendications 1 à 3, dans laquelle la couche de matière adhésive est formée d'une matière acrylique en émulsion aqueuse.

5. Bande magnétique (100) selon l'une quelconque des revendications 1 à 4, dans laquelle la couche de matière magnétique comprend une pâte d'oxyde magnétique.

6. Distributeur (300) comportant un noyau (310) et la bande magnétique (100) selon l'une quelconque des revendications 1 à 5, la bande magnétique (100) étant enroulée autour du noyau (310).

7. Distributeur (300) selon la revendication 6, comportant en outre un boîtier (305) enveloppant la bande magnétique (100), le boîtier (305) ayant une fente (320) à travers laquelle la bande magnétique (100) peut sortir.

8. Distributeur (300) selon l'une des revendications 6 et 7, comportant en outre un moyen (325) pour couper manuellement la bande magnétique (100).

9. Distributeur (300) selon la revendication 8, dans lequel le moyen (325) pour couper manuellement la bande magnétique (100) comporte une arête dentée (325) du boîtier (305).
